# EUROPEAN PATENT SPECIFICATION

(11) **EP 2 890 203 B1**
(45) Date of publication and mention of the grant of the patent: **10.01.2018**
(21) Application number: 13833167.3
(22) Date of filing: 27.08.2013
(51) Int. Cl.: H04W 74/08, H04W 72/04

(54) **RANDOM ACCESS RESPONSE METHOD AND APPARATUS**
VERFAHREN UND VORRICHTUNG FÜR EINE DIREKTZUGRIFFSANTWORT
PROCÉDÉ ET APPAREIL DE RÉPONSE D'ACCÈS ALÉATOIRE

(30) Priority: 27.08.2012 CN 201210307943
(43) Date of publication of application: 01.07.2015
(73) Proprietor: ZTE Corporation, Shenzhen, Guangdong 518057 (CN)
(72) Inventor: ZHANG, Peng, Shenzhen Guangdong 518057 (CN)
(74) Representative: EP&C
(86) International application number: PCT/CN2013/082409
(87) International publication number: WO 2014/032577

(56) References cited:
- CN-A- 101 990 311
- CN-A- 102 316 601
- US-A1- 2010 272 052
- US-A1- 2010 329 193
- US-A1- 2011 134 862
- MEDIATEK INC: "Remaining Issues for RA procedure", 3GPP DRAFT; R2-122225_REMAINING_ISSUES_FOR_RA_PROCEDUR E_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech; 20120521 - 20120525, 15 May 2012 (2012-05-15), XP050607187, [retrieved on 2012-05-15]
- RESEARCH IN MOTION: "GCF priority 3 - Inter-RAT PLMN Selection/ Selection of correct PLMN and RAT in shared network environment, Automatic mode", 3GPP DRAFT; R5-103824, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. Montreal; 20100510, 16 May 2010 (2010-05-16), XP050430150, [retrieved on 2010-05-16]

## Description

### TECHNICAL FIELD

The disclosure relates to the technical field of communications, and in particular to a Random Access Response (RAR) method and device.

### BACKGROUND

Random access is an access process performed before a User Equipment (UE) starts to communicate with a network, and it is intended to acquire uplink synchronization and an identity of the UE. A Random Access Channel (RACH) is used for implementing the uplink synchronization of a UE which has not acquired or has lost the uplink synchronization; once the UE completes the uplink synchronization, an evolved Node B (eNB) can schedule an uplink resource for the UE; there are two types of random access, i.e., contention-based random access and non-contention-based random access.

Specifically, the contention-based random access means that: a base station does not know the initiation of a random access process in advance, the UE selects a random access resource according to information of a cell System Information Block (SIB), wherein the random access resource includes a time frequency resource sending a Physical Random Access Channel (PRACH) and a preamble sequence index; so, when there are multiple UEs initiating a random access process simultaneously, there may be multiple UEs selecting a same random access resource; because there is a limitation to the number of UEs to be accessed simultaneously, there is a contention among the multiple UEs initiating access simultaneously, which causes that some UEs need to reinitiate the access process, thus increasing an access delay. The non-contention-based random access means that: the base station knows the initiation of a random access process in advance, and assigns a specific resource to a UE which is about to initiate the random access process.

The base station uses different preamble sequences to retrieve sequentially on the PRACH, if the preamble sequence matches, it means that there is a UE initiating the random access process, and then the base station responds to it, namely sending an RAR; the base station will respond to multiple preamble sequences which are detected in a same Transmission Time Interval (TTI); when there are multiple preamble sequences detected in the same TTI, and the number of the RARs which can be carried in the Messenger (MSG2) is less than that of the detected preamble sequences, the base station needs to decide which preamble sequences are responded preferentially, but the current protocol has not presented an explicit solution for the above situation.

MEDIATEK INC: "Remaining Issues for RA procedure", 3GPP DRAFT; R2-122225_REMAINING_ISSUES FOR_RA_PROCEDURE_FINAL, 3^{RD} GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG2, Prague, Czech, May 21-25, 2012, discloses preamble code pool partition and preamble code assignment. Preamble code pool partition is specified by number of RA-Preambles in RACH-ConfigCommon IE. The value would indicate how many non-dedicated random access preambles were configured in the cell. When the configured value is identical in two cells, it means that the preamble code pool of the two cells is aligned. If the preamble code pool is not aligned, some of preamble codes would be dedicated at one cell but non-dedicated at another cell. If dedicated preamble codes are sufficient, an eNB is able to assign non-overlapping ra-PreambleIndex for CFRA on coordinating CCs.

US 2011/0134862 A1 discloses an approach for performing a random access procedure using soft-dedicated preambles. A module designates one of a plurality of preambles, associated with one or more random access channels, as a soft-dedicated preamble. The soft-dedicated preamble is used by a user equipment that is either contention-based or non-contention-based.

US 2010/0272052 A1 discloses an apparatus and method for random access based on call priority in a mobile communication system, in which upon generation of a high-priority call, a mobile station selects a predetermined Random Access (RA) code indicating generation of a high-priority call, generates a preamble using the selected RA code, and transmits the preamble to a base station.

### SUMMARY

The disclosure is mainly intended to provide a RAR method and device, so as to implement that a base station responds at different priorities according to different access types when multiple UEs initiate a random access simultaneously.

An embodiment of the disclosure discloses a RAR method according to claim 1.

In an exemplary embodiment, the method may further include:
when it is determined that the non-contention-based random access preamble sequence does not exist, RAR resources are allocated, according to a preset order, to contention-based random accesses corresponding to contention-based random access preamble sequences.

In an embodiment, the preset order may include ascending order or descending order of the contention-based random access preamble sequences.

An embodiment of the disclosure further discloses a RAR device according to claim 4.

In an exemplary embodiment, the random access response module may be further configured to:
when it is determined that the non-contention-based random access does not exist in the preamble sequences matching the preset range, allocate, according to a preset order, RAR resources to contention-based random accesses corresponding to contention-based random access preamble sequences.

In an exemplary embodiment, the device may further include:
a random access classification module configured to classify the preamble sequences matching the preset range into non-contention-based random access preamble sequences and contention-based random access preamble sequences.

By the RAR method and device a beneficial effect is achieved that a base station responds at different priorities according to different access types when multiple UEs initiate a random access simultaneously, thereby improving the resource utilization and the whole system performance, and reducing a delay in the non-contention-based random access.

### BRIEF DESCRIPTION OF THE DRAWINGS

Fig. 1 is a schematic flowchart of a first embodiment of the RAR method according to the disclosure;
Fig. 2 is a random access signal flow diagram in the RAR method according to an embodiment of the disclosure;
Fig. 3 is a schematic structural diagram of members of the RAR in the RAR method according to an embodiment of the disclosure;
Fig. 4 is a schematic diagram of an MAC PDU including an MAC subheader and an MAC RAR in the RAR method according to the disclosure;
Fig. 5 is a schematic flowchart of a second embodiment of the RAR method according to the disclosure;
Fig. 6 is a contention-based random access signal flow diagram in the RAR method according to an embodiment of the disclosure;
Fig. 7 is a schematic flowchart of a third embodiment of the RAR method according to the disclosure;
Fig. 8 is a schematic structural diagram of a first embodiment of the RAR device according to the disclosure; and
Fig. 9 is a schematic structural diagram of a second embodiment of the RAR device according to the disclosure.

The implementation of the aim, the function features and the advantages of the disclosure will be further illustrated in combination with the accompanying drawings and embodiments.

### DETAILED DESCRIPTION

The technical solution of the disclosure is further described below in combination with the accompanying drawings and embodiments in the specification. It should be understood that specific embodiments described here are only used for illustrating the disclosure and not intended to limit the disclosure.

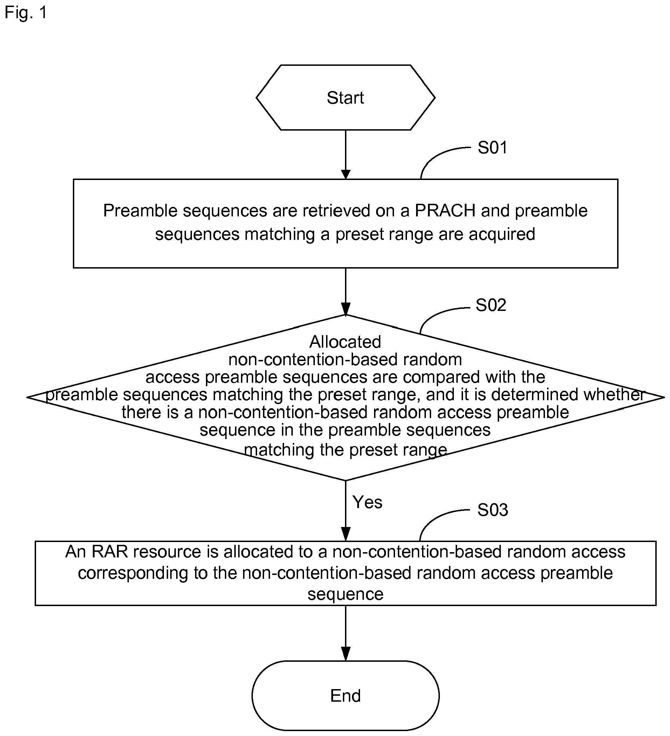

Fig. 1 is a schematic flowchart of a first embodiment of the RAR method according to the disclosure; as shown in Fig. 1, the RAR method of the disclosure includes the following steps.
Step S01, preamble sequences are retrieved on a PRACH and preamble sequences matching a preset range are acquired;

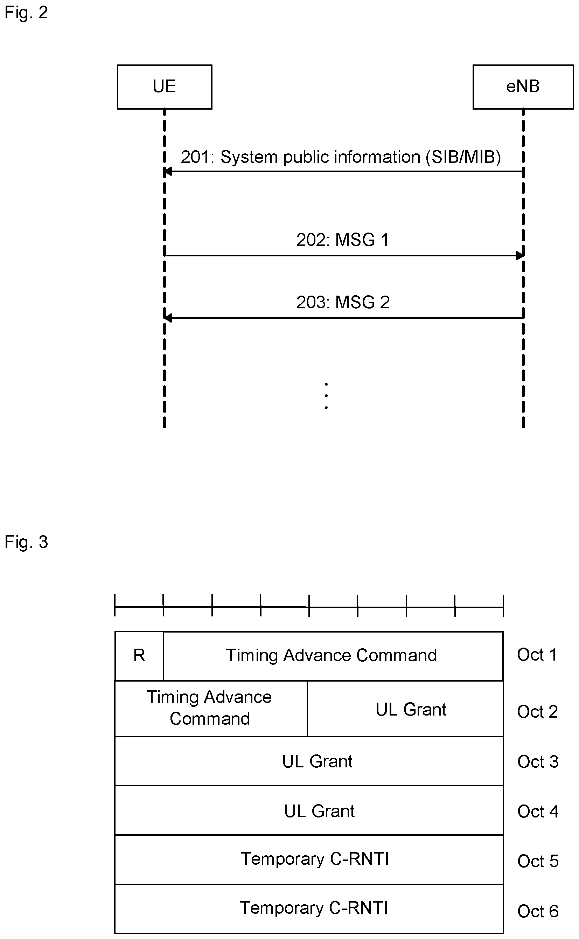

   Fig. 2 is a random access signal flow diagram in the RAR method according to an embodiment of the disclosure, including: Step 201, a base station, namely eNB, sends system public information (SIB/MIB) to a UE;
Step 202, after receiving the system public information, the UE sends an MSG1 request of random access preamble sequence to the base station;
Step 203, after receiving the MSG1 request, the base station returns an MSG2 response of random access preamble sequence to the UE;
here, the base station performs traversal of all the preamble sequences in order, retrieves preamble sequences on the PRACH, and finds out all of the preamble sequences matching the preset range; in a preferred embodiment, the value of the preamble sequence ranges from 0 to 63; the base station uses the preamble sequence to retrieve on the PRACH in an ascending order, and saves all the preamble sequences matching the preset range, for example, the preamble sequences matching the preset range which are detected at the current moment are {18, 20, 22, 55}.

Step S02, allocated non-contention-based random access preamble sequences are compared with the preamble sequences matching the preset range, and it is determined whether there is a non-contention-based random access preamble sequence in the preamble sequences matching the preset range; if so, proceed to Step S03;
the base station compares allocated non-contention-based random access preamble sequences which are saved and may be triggered at the current moment with the retrieved preamble sequences matching the preset range; for example, the non-contention-based random access preamble sequences that are previously saved by the base station are {50, 55}, then lookup is performed on the preamble sequences {18, 20, 22, 55} matching the preset range in Step S01; it is obvious that the non-contention-based random access preamble sequence whose preamble sequence is {55} exists, then it means that a non-contention-based random access exists at the moment; if the non-contention-based random access preamble sequence that is previously saved by the base station is {50}, then it is not found in the preamble sequences matching the preset range in Step S01, and it means that a non-contention-based random access does not occur at the moment.

Step S03: a RAR resource is allocated to a non-contention-based random access corresponding to the non-contention-based random access preamble sequence;
the base station compares the saved non-contention-based random access preamble sequence which may be triggered at the current moment with the retrieved preamble sequences matching the preset range; if the non-contention-based random access preamble sequence exists in the retrieved preamble sequence, the base station preferentially allocates the RAR resource to the non-contention-based random access corresponding to the non-contention-based random access preamble sequence; after the corresponding RAR resource allocation of the non-contention-based random access is ended, the corresponding RAR resource allocation of a contention-based random access corresponding to a contention-based random access preamble sequence is performed. Specifically, in a preferred embodiment, the base station first allocates the RAR resource to the non-contention-based random access whose preamble sequence is {55}, and then allocates the RAR resource to the contention-based random accesses whose preamble sequences are {18, 20, 22}, which ensures that the non-contention-based random access can be responded preferentially when the RAR resource is limited.

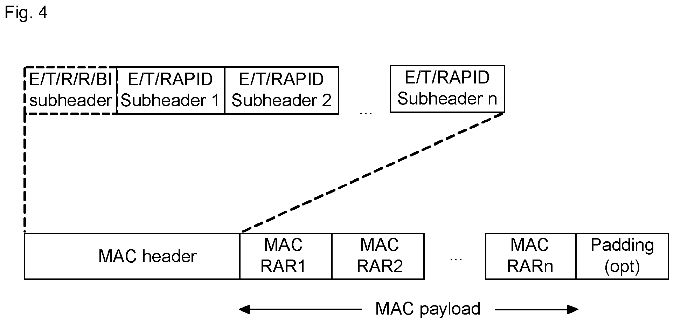

In a preferred embodiment, for a structural diagram of the RAR in the RAR resource, refer to Fig. 3 which shows a schematic structural diagram of members of the RAR in the RAR method according to an embodiment of the disclosure; in a preferred embodiment, the resource carried in the RAR is for use in indicating a frequency domain location which is used when the UE sends uplink bearer data and its size, and a corresponding description field is the UL Grant field in the RAR. The RAR resource includes a frequency domain resource for bearing an uplink load, a Time Adjustment Amount (TA) and a Cell Radio Network Temporary Identifier (C-RNTI). Fig. 4 is a schematic diagram of an MAC PDU including an MAC subheader and an MAC RAR in the RAR method according to the disclosure; as shown in Fig. 4, the MAC subheader carried in the MAC PDU is not included in the MAC RAR resource.

By the method that includes: preamble sequences are retrieved on a PRACH, preamble sequences matching a preset range are acquired; allocated non-contention-based random access preamble sequences are compared with the preamble sequences matching the preset range,, and when it is determined that the non-contention-based random access preamble sequence exists in the preamble sequences matching the preset range, a RAR resource is allocated to a non-contention-based random access corresponding to the non-contention-based random access preamble sequence, the disclosure achieves a beneficial effect that a base station responds at different priorities according to different access types when multiple UEs initiate a random access simultaneously, thereby improving the resource utilization and the whole system performance, and reducing a delay in the non-contention-based random access.

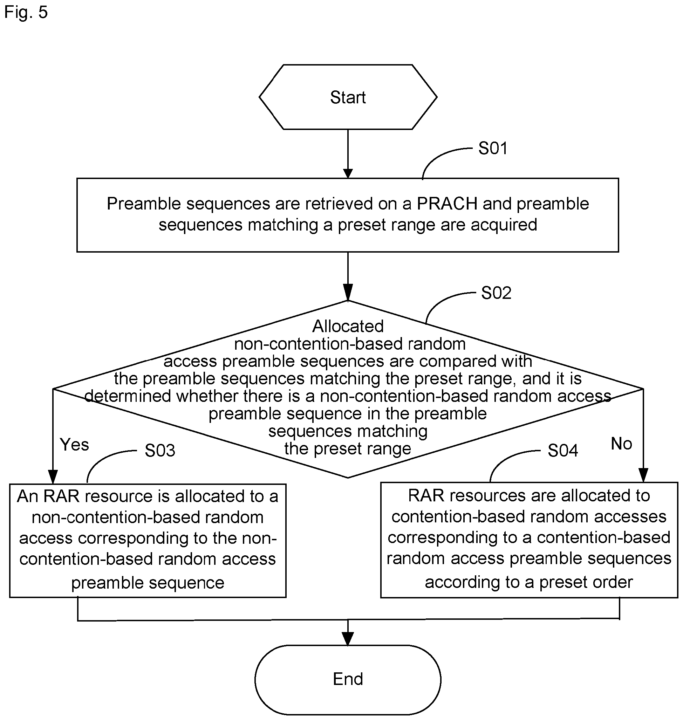

Fig. 5 is a schematic flowchart of a second embodiment of the RAR method according to the disclosure; the difference between the present embodiment and the first embodiment of the RAR method according to the disclosure only lies in addition of Step S04; the present embodiment only describes Step S04 in detail, and for the other steps involved in the RAR method of the present embodiment, refer to the specific description of related embodiments, so they will not be repeated here.

As shown in Fig. 5, after Step S02 that currently saved non-contention-based random access preamble sequences are compared with the preamble sequences matching the preset range and it is determined whether there is a non-contention-based random access preamble sequence in the preamble sequences matching the preset range, the RAR method of the present embodiment further includes:
Step S04: if not, RAR resources are allocated, according to a preset order, to contention-based random accesses corresponding to contention-based random access preamble sequences.

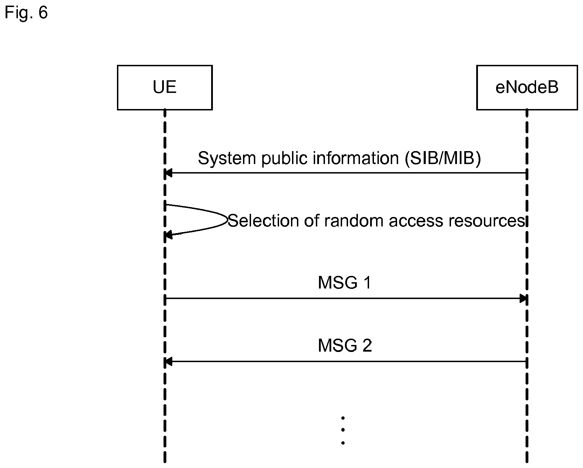

If there is the non-contention-based random access preamble sequence in the retrieved preamble sequences, the base station preferentially allocates the RAR resource to the non-contention-based random access corresponding to the non-contention-based random access preamble sequence; after the corresponding RAR resource allocation of the non-contention-based random access is ended, the RAR resources are allocated to the contention-based random accesses corresponding to the contention-based random access preamble sequences according to sequential order of the random access preamble sequences. Specifically, for example, the non-contention-based random access preamble sequence which is saved by the base station and may be triggered at the current moment is {50}, and the preamble sequences matching the preset range which are detected at the current moment are {18, 20, 22, 55}, in which the non-contention-based random access preamble sequence {50} is not included, then the base station allocates the RAR resource to the contention-based random access corresponding to the contention-based random access preamble sequence according to sequential order of the contention-based random access preamble sequences. Fig. 6 is a contention-based random access signal flow diagram in the RAR method according to an embodiment of the disclosure, as shown in Fig. 6, the UE randomly selects in multiple available random access resources during the contention-based random access.

In a preferred embodiment, when the base station detects both the contention-based random access preamble sequence and the non-contention-based random access preamble sequence at the same time, the non-contention-based random access preamble sequence is responded preferentially when performing the RAR response; the reason for this is that: processes of the non-contention-based random access and the contention-based random access correspond to different random access scenarios; the non-contention-based random access is applied to the random access scenarios triggered by switch and arrival of downlink data losing uplink synchronization, except the above two scenarios, the contention-based random access can also be applied to an initial random access, a random access triggered by re-establishment and a random access triggered by arrival of uplink data losing uplink synchronization; in comparison, the scenario that the process of the non-contention-based random access is applied to has a higher requirement on an access delay. Secondly, the non-contention-based random access is a random access process dominated by the base station, so the base station should give a higher priority to response to such access. Thirdly, because there is possibility of error detection when the base station performs random access detection, in multiple preamble sequences detected in the same TTI, the error-detection probability corresponding to the non-contention-based random access preamble sequence is less than that of the other contention-based random access preamble sequences. So, the non-contention-based random access preamble sequence is responded preferentially.

By the method that includes: when it is determined that the non-contention-based random access preamble sequence does not exist in the preamble sequences matching the preset range, the RAR resources are allocated to the contention-based random accesses according to the preset order, the embodiment has a beneficial effect of improving the system resource utilization.

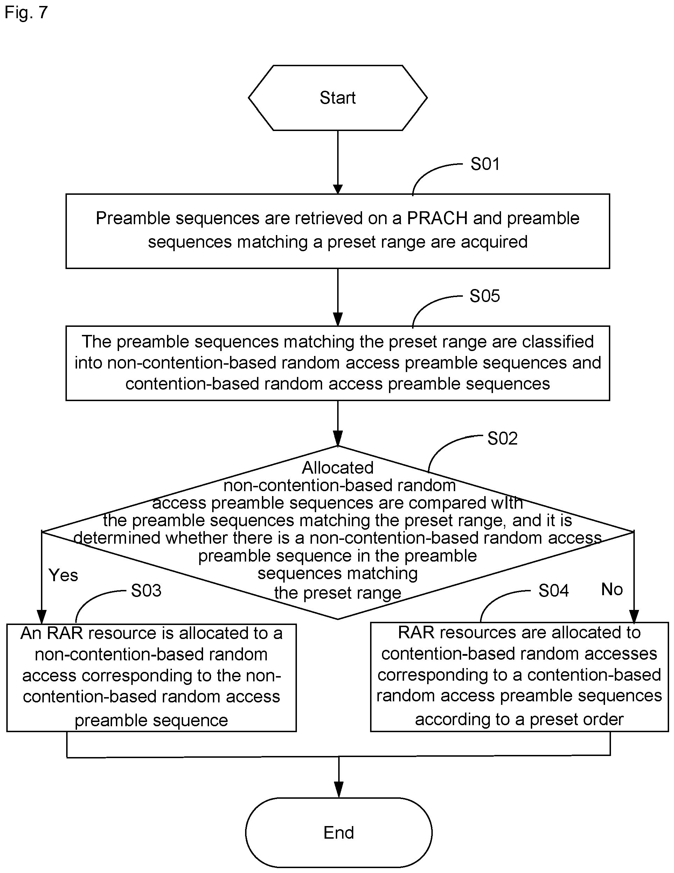

Fig. 7 is a schematic flowchart of a third embodiment of the RAR method according to the disclosure; the difference between the present embodiment and the second embodiment of the RAR method according to the disclosure lies in addition of Step S05; the present embodiment only describes Step S05 in detail, and for the other steps involved in the RAR method of the present embodiment, refer to the specific description of related embodiments, so they will not be repeated here.

As shown in Fig. 7, before Step S02 that currently saved non-contention-based random access preamble sequences are compared with the preamble sequences matching the preset range and it is determined whether there is a non-contention-based random access preamble sequence in the preamble sequences matching the preset range, the RAR method of the present embodiment further includes:
Step S05: the preamble sequences matching the preset range are classified into non-contention-based random access preamble sequences and contention-based random access preamble sequences.

The base station classifies the available preamble sequences into the contention-based random access preamble sequences and the non-contention-based random access preamble sequences; for contention-based random accesses and non-contention-based random accesses, the base station can know in advance; because a triggering non-contention-based random access preamble sequence index is issued by the base station, when the base station detects both the contention-based random access preamble sequence and the non-contention-based random access preamble sequence at the same time, the base station responds to the non-contention-based random access preamble sequence preferentially when performing the RAR response.

The method of classifying the preamble sequences matching the preset range into the non-contention-based random access preamble sequences and the contention-based random access preamble sequences in the present embodiment is an important premise for the base station to respond to the non-contention-based random access preamble sequence preferentially when detecting both the contention-based random access preamble sequence and the non-contention-based random access preamble sequence at the same time, and it has a beneficial effect of improving the resource utilization.

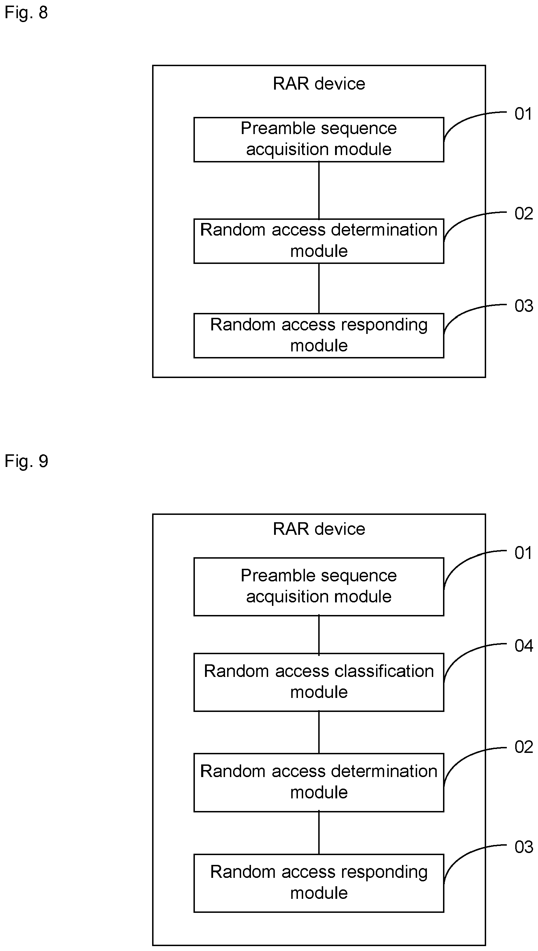

Fig. 8 is a schematic structural diagram of a first embodiment of the RAR device according to the disclosure; as shown in Fig. 8, the RAR device of the disclosure includes:
a preamble sequence acquisition module 01 configured to retrieve preamble sequences on the PRACH, and acquire preamble sequences matching a preset range;
Fig. 2 is a random access signal flow diagram in the RAR method according to an embodiment of the disclosure, including: Step 201, the base station, namely eNB, sends the system public information (SIB/MIB) to a UE;
Step 202, after receiving the system public information, the UE sends the MSG1 request of random access preamble sequence to the base station;
Step 203, after receiving the MSG1 request, the base station returns the MSG2 response of random access preamble sequence to the UE;
here, the preamble sequence acquisition module 01 of the base station performs traversal of all the preamble sequences in order, retrieves preamble sequences on the PRACH, and finds out all the preamble sequences matching the preset range; in a preferred embodiment, the value of the preamble sequence ranges from 0 to 63; the preamble sequence acquisition module 01 uses the preamble sequence to retrieve on the PRACH in an ascending order or a descending order, and saves all the preamble sequences matching the preset range, for example, the preamble sequences matching the preset range which are detected at the current moment are {18, 20, 22, 55};
a random access determination module 02 configured to compare allocated non-contention-based random access preamble sequences with the preamble sequences matching the preset range, and determine whether there is a non-contention-based random access preamble sequence in the preamble sequences matching the preset range;
the random access determination module 02 of the base station compares allocated non-contention-based random access preamble sequences which are saved and may be triggered at the current moment with the retrieved preamble sequences matching the preset range; for example, the non-contention-based random access preamble sequences that are previously saved by the base station are {50, 55}, the random access determination module 02 looks up in the preamble sequences {18, 20, 22, 55} which has been matched in the preamble sequence acquisition module 01; it is obvious that the non-contention-based random access preamble sequence whose preamble sequence is {55} exists, then it means that a non-contention-based random access exists at the moment; if the non-contention-based random access preamble sequence that is previously saved by the base station is {50}, then the random access determination module 02 does not find in the preamble sequence which has been matched in the preamble sequence acquisition module 01, and it means that a non-contention-based random access does not occur at the moment;
a random access responding module 03 configured to, when it is determined that the non-contention-based random access preamble sequence exists in the preamble sequences matching the preset range, allocate an RAR resource to the non-contention-based random access corresponding to the non-contention-based random access preamble sequence;
the random access responding module 03 is further configured to, when it is determined that the non-contention-based random access preamble sequence does not exist in the preamble sequences matching the preset range, allocate, according to a preset order, RAR resources to contention-based random accesses corresponding to the contention-based random access preamble sequences.

The random access determination module 02 compares the saved non-contention-based random access preamble sequence which may be triggered at the current moment with the retrieved preamble sequences matching the preset range; if the non-contention-based random access preamble sequence exists in the retrieved preamble sequence, the random access responding module 03 preferentially allocates the RAR resource to the non-contention-based random access corresponding to the non-contention-based random access preamble sequence; after the corresponding RAR resource allocation of the non-contention-based random access is ended, the random access responding module 03 allocates according to the preset order the RAR resource to the contention-based random access corresponding to the contention-based random access preamble sequence.

Specifically, in a preferred embodiment, the random access responding module 03 first allocates the RAR resource to the non-contention-based random access whose preamble sequence is {55}, and then allocates the RAR resource to the contention-based random accesses whose preamble sequences are {18, 20, 22}, which ensures that the non-contention-based random access can be responded preferentially when the RAR resource is limited. For a structure of the RAR in the RAR resource, refer to the specific description of the embodiment in Fig. 3, and the description of the MAC PDU including an MAC subheader and an MAC RAR in the RAR method according to the disclosure can refer to the specific description of the embodiment in Fig. 4, so they will not be repeated here.

When the random access determination module 02 determines that the non-contention-based random access preamble sequence does not exist in the preamble sequences matching the preset range, the random access responding module 03 allocates the RAR resource to the contention-based random access corresponding to the contention-based random access preamble sequence in sequential order. Specifically, for example, the non-contention-based random access preamble sequence which is saved by the base station and may be triggered at the current moment is {50}, and the preamble sequences matching the preset range which are detected by the preamble sequence acquisition module 01 at the current moment are {18, 20, 22, 55}, and the random access determination module 02 determines that the non-contention-based random access preamble sequence {50} is not included, then the random access responding module 03 allocates the RAR resource to the contention-based random access corresponding to the contention-based random access preamble sequence according to sequential order of the contention-based random access preamble sequences. The contention-based random access signal flow diagram in the RAR method of the disclosure can refer to the specific description of the embodiment in Fig. 6, so it will not be repeated here.

In a preferred embodiment, when the base station detects both the contention-based random access preamble sequence and the non-contention-based random access preamble sequence at the same time, the non-contention-based random access preamble sequence is responded preferentially when performing the RAR response; the reason for this is that: the processes of the non-contention-based random access and the contention-based random access correspond to different random access scenarios; the non-contention-based random access is applied to the random access scenarios triggered by switch and arrival of downlink data losing uplink synchronization, except the above two scenarios, the contention-based random access can also be applied to an initial random access, a random access triggered by re-establishment and a random access triggered by arrival of uplink data losing uplink synchronization; in comparison, the scenario that the process of the non-contention-based random access is applied to has a higher requirement on an access delay. Secondly, the non-contention-based random access is a random access process dominated by the base station, so the base station should give a higher priority to response to such access. Thirdly, because there is possibility of error detection when the base station performs random access detection, in multiple preamble sequences detected in the same TTI, the error-detection probability corresponding to the non-contention-based random access preamble sequence is less than that of the other contention-based random access preamble sequences. So, the non-contention-based random access preamble sequence is responded preferentially.

By retrieving on the PRACH, and acquiring the preamble sequences matching the preset range, comparing the allocated non-contention-based random access preamble sequences with the preamble sequences matching the preset range, and when it is determined that the non-contention-based random access preamble sequence exists in the preamble sequences matching the preset range, the RAR resource is preferentially allocated to the non-contention-based random access corresponding to the non-contention-based random access preamble sequence, the present embodiment achieves a beneficial effect that the base station responds at different priorities according to different access types when multiple UEs initiate the random access simultaneously, thereby improving the resource utilization and the whole system performance, and reducing a delay in the non-contention-based random access.

Fig. 9 is a schematic structural diagram of a second embodiment of the RAR device according to the disclosure; the difference between the present embodiment and the first embodiment of the RAR device according to the disclosure only lies in addition of a random access classification module 04; the present embodiment only describes the random access classification module 04 in detail, and for the other modules involved in the RAR device of the present embodiment, refer to the specific description of related embodiments, so they will not be repeated here.

As shown in Fig. 9, the RAR device of the disclosure further includes:
the random access classification module 04 configured to classify the preamble sequences matching the preset range into non-contention-based random access preamble sequences and contention-based random access preamble sequences.

The random access classification module 04 of the base station classifies the available preamble sequences into the contention-based random access preamble sequences and the non-contention-based random access preamble sequences; for contention-based random accesses and non-contention-based random accesses, the base station can know in advance; because a triggering non-contention-based random access preamble sequence index is issued by the base station, when the base station detects both the contention-based random access preamble sequence and the non-contention-based random access preamble sequence at the same time, the base station responds to the non-contention-based random access preamble sequence preferentially when performing the RAR response.

In a practical application, the preamble sequence acquisition module, the random access determination module, the random access responding module and the random access classification module can be implemented by a Central Processing Unit (CPU), a Digital Signal Processor (DSP) or a Field-Programmable Gate Array (FPGA) in the RAR device.

Classifying the preamble sequences matching the preset range into the non-contention-based random access preamble sequences and the contention-based random access preamble sequences in the present embodiment is an important premise for the base station to respond to the non-contention-based random access preamble sequence preferentially when detecting both the contention-based random access preamble sequence and the non-contention-based random access preamble sequence at the same time, and it has a beneficial effect of improving the resource utilization.

What described above are only preferred embodiments of the disclosure and not intended to limit the scope of protection of the disclosure; any equivalent replacements of structure or flow performed based on contents of the specification and accompanying drawings of the disclosure, or direct or indirect application of the equivalent replacements in other related technical fields shall fall within the scope of protection of the disclosure.

## Claims

1. A Random Access Response, RAR, method, comprising:
retrieving, by a base station, preamble sequences in a same Transmission Time Interval, TTI on a Physical Random Access Channel, PRACH, and acquiring preamble sequences matching a preset range (S01);
classifying, by the base station, the preamble sequences matching the preset range into non-contention-based random access preamble sequences and contention-based random access preamble sequences (S05);
comparing, by the base station, allocated non-contention-based random access preamble sequences with the preamble sequences matching the preset range, and determining whether there is a non-contention-based random access preamble sequence in the preamble sequences matching the preset range (S02); and **characterized by** when it is determined that the non-contention-based random access preamble sequence exists, preferentially allocating, by the base station, a RAR resource to a non-contention-based random access corresponding to the non-contention-based random access preamble sequence (S03), and then allocating said RAR resource to a contention-based random access corresponding to a contention-based random access when the resource allocation of the non-contention-based random access is ended.

2. The RAR method according to claim 1, further comprising:
when it is determined that the non-contention-based random access preamble sequence does not exist, allocating, by the base station according to a preset order, RAR resources to contention-based random accesses corresponding to contention-based random access preamble sequences (S04).

3. The RAR method according to claim 2, wherein the preset order comprises ascending order or descending order of the contention-based random access preamble sequences.

4. A Random Access Response, RAR, device, wherein the device is located in a base station, the device comprising:
a preamble sequence acquisition module (01) configured to retrieve preamble sequences in a same Transmission Time Interval, TTI on a Physical Random Access Channel, PRACH, and acquire preamble sequences matching a preset range;
a random access classification module (04) configured to classify the preamble sequences matching the preset range into non-contention-based random access preamble sequences and contention-based random access preamble sequences;
a random access determination module (02) configured to compare allocated non-contention-based random access preamble sequences with the preamble sequences matching the preset range, and determine whether there is a non-contention-based random access preamble sequence in the preamble sequences matching the preset range; and being **characterized by** a random access responding module (03), which is configured to, when it is determined that the non-contention-based random access preamble sequence exists in the preamble sequences matching the preset range, preferentially allocate a RAR resource to a non-contention-based random access corresponding to the non-contention-based random access preamble sequence, and then allocating said RAR resource to a contention-based random access corresponding to a contention-based random access when the RAR resource allocation of the non-contention-based random access is ended.

5. The RAR device according to claim 4, wherein the random access responding module (03) is further configured to:
when it is determined that the non-contention-based random access does not exist in the preamble sequences matching the preset range, allocate, according to a preset order, RAR resources to contention-based random accesses corresponding to contention-based random access preamble sequences.

6. The RAR device according to claim 5, wherein the preset order comprises ascending order or descending order of the contention-based random access preamble sequences.

## Patentansprüche

1. Zufallszugriffsantwortverfahren, RAR-Verfahren, umfassend:
Abrufen, durch eine Basisstation, von Präambelsequenzen in einem gleichen Übertragungszeitintervall, TTI, auf einem physikalischen Zufallszugriffskanal, PRACH, und Erfassen von Präambel-sequenzen, die mit einem voreingestellten Bereich übereinstimmen (S01);
Klassifizieren, durch die Basisstation, der Präambelsequenzen, die mit dem voreingestellten Bereich übereinstimmen, in nicht-konkurrenzbasierte Zufallszugriffspräambelsequenzen und konkurrenzbasierte Zufallszugriffspräambelsequenzen (S05);
Vergleichen, durch die Basisstation, von zugewiesenen nicht-konkurrenzbasierten Zufallszugriffspräambelsequenzen mit den Präambelsequenzen, die mit dem voreingestellten Bereich übereinstimmen, und Bestimmen, ob es in den Präambelsequenzen, die mit dem voreingestellten Bereich übereinstimmen, eine nicht-konkurrenzbasierte Zufallszugriffspräambelsequenz gibt (S02); und
**gekennzeichnet durch** das Folgende:
bevorzugtes Zuteilen, durch die Basisstation, von einer RAR-Ressource zu einem nicht-konkurrenzbasierten Zufallszugriff, der der nicht-konkurrenzbasierten Zufallszugriffspräambelsequenz entspricht, wenn bestimmt wird, dass die nicht-konkurrenzbasierte Zufallszugriffspräambelsequenz vorliegt (S03), und dann Zuteilen von der RAR-Ressource zu einem konkurrenzbasierten Zufallszugriff, der einem konkurrenzbasierten Zufallszugriff entspricht, wenn die Ressourcenzuteilung von dem nicht-konkurrenzbasierten Zufallszugriff beendet ist.

2. RAR-Verfahren nach Anspruch 1, ferner umfassend:
wenn bestimmt wird, dass die nicht-konkurrenzbasierte Zufallszugriffspräambelsequenz nicht vorliegt, Zuteilen, durch die Basisstation, von RAR-Ressourcen zu konkurrenzbasierten Zufallszugriffen, die konkurrenzbasierten Zufallszugriffspräambelsequenzen entsprechen, und zwar entsprechend einer voreingestellten Reihenfolge (S04).

3. RAR-Verfahren nach Anspruch 2, wobei die voreingestellte Reihenfolge eine aufsteigende Reihenfolge oder absteigende Reihenfolge der konkurrenzbasierten Zufallszugriffspräambelsequenzen umfasst.

4. Zufallszugriffsantwortvorrichtung, RAR-Vorrichtung, wobei die Vorrichtung in einer Basisstation angeordnet ist, wobei die Vorrichtung das Folgende umfasst:
ein Präambelsequenzerfassungsmodul (01), das konfiguriert ist, Präambel-sequenzen in einem gleichen Übertragungszeitintervall, TTI, auf einem physikalischen Zufallszugriffs-kanal, PRACH, abzurufen und Präambelsequenzen, die mit einem voreingestellten Bereich übereinstimmen, zu erfassen;
ein Zufallszugriffsklassifizierungsmodul (04), das konfiguriert ist, die Präambelsequenzen, die mit dem voreingestellten Bereich übereinstimmen, in nicht-konkurrenzbasierte Zufallszugriffspräambelsequenzen und konkurrenzbasierte Zufallszugriffspräambelsequenzen zu klassifizieren;
ein Zufallszugriffsbestimmungsmodul (02), das konfiguriert ist, zugewiesene nicht-konkurrenzbasierten Zufallszugriffspräambelsequenzen mit den Präambelsequenzen, die mit dem voreingestellten Bereich übereinstimmen, zu vergleichen und zu bestimmen, ob es in den Präambelsequenzen, die mit dem voreingestellten Bereich übereinstimmen, eine nicht-konkurrenzbasierte Zufallszugriffspräambelsequenz gibt; und
durch das Folgende gekennzeichnet ist:
ein Zufallszugriffsantwortmodul (03), das konfiguriert ist, eine RAR-Ressource einem nicht-konkurrenzbasierten Zufallszugriff, der der nicht-konkurrenzbasierten Zufallszugriffspräambelsequenz entspricht, bevorzugt zuzuteilen, wenn bestimmt wird, dass die nicht-konkurrenzbasierte Zufallszugriffspräambelsequenz vorliegt in den Präambelsequenzen die mit dem voreingestellten Bereich übereinstimmen, und dann die RAR-Ressource einem konkurrenzbasierten Zufallszugriff, der einem konkurrenzbasierten Zufallszugriff entspricht, zuzuteilen, wenn die RAR-Ressourcenzuteilung von dem nicht-konkurrenzbasierten Zufallszugriff beendet ist.

5. RAR-Vorrichtung nach Anspruch 4, wobei das Zufallszugriffsantwortmodul (03) ferner wie folgt konfiguriert ist:
Zuteilen von RAR-Ressourcen zu konkurrenzbasierten Zufallszugriffen, die konkurrenzbasierten Zufallszugriffspräambelsequenzen entsprechen, und zwar entsprechend einer voreingestellten Reihenfolge, wenn bestimmt wird, dass der nicht-konkurrenzbasierte Zufallszugriff nicht in den Präambel-sequenzen vorliegt, die mit dem voreingestellten Bereich übereinstimmen.

6. RAR-Vorrichtung nach Anspruch 5, wobei die voreingestellte Reihenfolge eine aufsteigende Reihenfolge oder absteigende Reihenfolge der konkurrenzbasierten Zufallszugriffspräambelsequenzen umfasst.

## Revendications

1. Procédé RAR de réponse d'accès aléatoire, comprenant:
récupérer, par une station de base, des séquences de préambule dans un même intervalle de temps de transmission TTI sur un canal d'accès aléatoire physique PRACH, et acquérir des séquences de préambule correspondant à une plage prédéfinie (S01) ;
classer, par la station de base, les séquences de préambule correspondant à la plage prédéfinie en des séquences de préambule d'accès aléatoire sans conflit et en séquences de préambule d'accès aléatoire avec conflit (S05) ;
comparer, par la station de base, des séquences de préambule d'accès aléatoire sans conflit attribuées avec les séquences de préambule correspondant à la plage prédéfinie et déterminer s'il existe une séquence de préambule d'accès aléatoire sans conflit dans les séquences de préambule correspondant à la plage prédéfinie (S02) ; et
**caractérisé en ce que**,
lorsqu'il est déterminé que la séquence de préambule d'accès aléatoire sans conflit existe, attribuer de préférence, par la station de base, une ressource RAR à un accès aléatoire sans conflit correspondant à la séquence de préambule d'accès aléatoire sans conflit (S03), et alors attribuer ladite ressource RAR à un accès aléatoire avec conflit correspondant à un accès aléatoire avec conflit quand l'attribution de ressource à l'accès aléatoire sans conflit prend fin.

2. Le Procédé RAR selon la revendication 1, comprenant en outre:
lorsqu'il est déterminé que la séquence de préambule d'accès aléatoire sans conflit n'existe pas, attribuer, par la station de base selon un ordre prédéfini, des ressources RAR à des accès aléatoires avec conflit correspondant à des séquences de préambule d'accès aléatoire avec conflit (S04).

3. Le procédé RAR selon la revendication 2, dans lequel l'ordre prédéfini comprend un ordre croissant ou un ordre décroissant des séquences de préambule d'accès aléatoire avec conflit.

4. Dispositif RAR de réponse d'accès aléatoire, dans lequel le dispositif est situé dans une station de base, le dispositif comprenant:
un module (01) d'acquisition de séquence de préambule configuré pour récupérer des séquences de préambule dans un même intervalle de temps de transmission TTI sur un canal d'accès aléatoire physique PRACH et acquérir des séquences de préambule correspondant à une plage prédéterminée ;
un module (04) de classement d'accès aléatoires configuré pour classer les séquences de préambule correspondant à la plage prédéfinie en des séquences de préambule d'accès aléatoire sans conflit et en séquences de préambule d'accès aléatoire avec conflit ;
un module (02) de détermination d'accès aléatoire configuré pour comparer des séquences de préambule d'accès aléatoire sans conflit attribuées avec les séquences de préambule correspondant à la plage prédéfinie et pour déterminer s'il existe une séquence de préambule d'accès aléatoire sans conflit dans les séquences de préambule correspondant à la plage prédéfinie ; et
étant **caractérisé en ce que**
un module (03) de réponse d'accès aléatoire, configuré pour, lorsqu'il est déterminé que la séquence de préambule d'accès aléatoire sans conflit existe dans les séquences de préambule correspondant à la plage prédéfinie, attribuer de préférence une ressource RAR à un accès aléatoire sans conflit correspondant à la séquence de préambule d'accès aléatoire sans conflit, et alors attribuer ladite ressource RAR à un accès aléatoire avec conflit correspondant à un accès aléatoire avec conflit quand l'attribution de ressource RAR à l'accès aléatoire sans conflit prend fin.

5. Le dispositif RAR selon la revendication 4, dans lequel le module (03) de réponse d'accès aléatoire est en outre configuré pour:
quand il est déterminé que l'accès aléatoire sans conflit n'existe pas dans les séquences de préambule correspondant à la plage prédéfinie, attribuer, selon un ordre prédéfini, des ressources RAR à des accès aléatoires avec conflit correspondant à des séquences de préambule d'accès aléatoire avec conflit.

6. Le dispositif RAR selon la revendication 5, dans lequel l'ordre prédéfini comprend un ordre croissant ou un ordre décroissant des séquences de préambule d'accès aléatoire avec conflit.
